# EUROPÄISCHE PATENTSCHRIFT

(11) **EP 2 729 857 B1**
(45) Veröffentlichungstag und Bekanntmachung des Hinweises auf die Patenterteilung: **21.03.2018**
(21) Anmeldenummer: 12730541.5
(22) Anmeldetag: 28.06.2012
(51) Int. Cl.: G05B 23/02, B60R 16/023

(54) **DOKUMENTATION VON FEHLERN IN EINEM FEHLERSPEICHER EINES KRAFTFAHRZEUGS**
DOCUMENTATION OF FAULTS IN A FAULT MEMORY OF A MOTOR VEHICLE
DOCUMENTATION D'ERREURS AU SEIN D'UNE MÉMOIRE D'ERREURS D'UN VÉHICULE À MOTEUR

(30) Priorität: 07.07.2011 DE 102011078793
(43) Veröffentlichungstag der Anmeldung: 14.05.2014
(73) Patentinhaber: Bayerische Motoren Werke Aktiengesellschaft, 80809 München (DE)
(72) Erfinder: RESCHKA, Markus, 85774 Unterföhring (DE); JURTHE, Stefan, 83607 Holzkirchen (DE); KRAEKER, Tobias, 81737 München (DE)
(86) Internationale Anmeldenummer: PCT/EP2012/062581
(87) Internationale Veröffentlichungsnummer: WO 2013/004589

(56) Entgegenhaltungen:
- DE-A1- 10 301 983
- FR-A1- 2 934 389
- US-A1- 2007 180 318
- US-A1- 2009 248 238

## Beschreibung

Die Erfindung betrifft ein Verfahren zum Betrieb eines Kommunikationsnetzwerks eines Kraftfahrzeugs, wobei das Kommunikationsnetzwerk eine Mehrzahl an Steuergeräten umfasst, die an einen Datenbus angeschlossen sind und über diesen Nachrichten miteinander austauschen können. Die Mehrzahl an Steuergeräten ist an eine Spannungsquelle angeschlossen. Ferner weisen die Steuergeräte eine Spannungsmesseinrichtung zur Ermittlung der an ihren Versorgungsanschlüssen anliegenden Spannung auf. Jedes der Steuergeräte kann auf einen zentralen und/oder internen Fehlerspeicher zumindest schreibend zugreifen, um darin eine Information über einen durch das betreffende Steuergerät detektierten Fehler zu dokumentieren. Die Erfindung betrifft ferner ein Steuergerät für ein Kommunikationsnetzwerk eines Kraftfahrzeugs sowie ein Kommunikationsnetzwerk eines Kraftfahrzeugs.

Ein Fehlerspeichereintrag dokumentiert die originäre Ursache einer in dem Kraftfahrzeug auftretenden Funktionseinschränkung. Dies bedeutet, jeder Fehlerspeichereintrag ist ursachenbezogen. Ein Fehlerspeichereintrag kann bspw. durch eine von einem anderen Steuergerät empfangene Nachricht verursacht sein, wenn die Nachricht selbst oder der Inhalt der Nachricht nicht den üblichen Anforderungen an das Datenformat, den Wertebereich usw. entsprechen. Fehlerspeichereinträge werden bspw. auch dann erzeugt, wenn die an einem Steuergerät anliegende Spannung eine vorgegebene Spannungsschwelle unterschreitet. Dieser Zustand wird als Unterspannung bezeichnet.

Hierzu ermittelt jedes Steuergerät die an seinen Versorgungsanschlüssen anliegende Spannung und überprüft, ob eine Unterspannung gegeben ist. Abhängig von der ermittelten Spannung entscheidet jedes Steuergerät selbst, ob es die von ihm bereitgestellten Funktionen anbieten kann. Ist dies nicht der Fall, so wird ein Ausfall im Fehlerspeicher dokumentiert. Fehlende, über den Datenbus übertragene Nachrichten von anderen Steuergeräten werden bei Unterspannung nicht in Fehlerspeicher dokumentiert. Stattdessen wird lediglich der die Unterspannung repräsentierende Fehlerspeichereintrag im Fehlerspeicher vorgehalten.

Dies führt zu dem Problem, dass bei einer Überprüfung des Kraftfahrzeugs in einer Werkstatt nicht genau erkannt werden kann, was die Ursache für den die Unterspannung charakterisierenden Fehlerspeichereintrag ist. Es kann insbesondere nicht unterschieden werden, ob ein Defekt am Steuergerät, an einem Stecker, an einem Kabel, an einer Verbindung zu einem Bezugspotenzial, an einem Kommunikationspartner oder einem Energiespeicher des Kraftfahrzeugs vorliegt. Es ist deshalb aufwändig und teuer, den Fehler zu finden. Häufig führt dies dazu, dass das den Fehlerspeichereintrag aufweisende Steuergerät getauscht wird, was mit hohen Kosten verbunden ist.

**Die Druckschrift** DE 10301983 A1 **offenbart ein Verfahren und eine Vorrichtung für eine Diagnose eines elektronischen Fahrzeugsystems. Dabei können Variablen und Fehlereinträge mehrerer vernetzter Steuergeräte getriggert durch ein einziges Steuergerät dezentral bei den einzelnen Steuergeräten und/oder in einem zentralen Fehlerspeicher abgelegt werden.**

Es ist Aufgabe der Erfindung, ein Verfahren anzugeben, welches es ermöglicht, anhand eines Fehlerspeichereintrages die Ursache des Fehlers auf einfachere und zuverlässigere Weise zu bestimmen. Es ist weiterhin Aufgabe der Erfindung, ein entsprechendes Computerprogrammprodukt, ein Steuergerät sowie ein Kommunikationsnetzwerk für ein Kraftfahrzeug anzugeben, welche die Ausführung des Verfahrens ermöglichen.

Diese Aufgaben werden gelöst durch ein Verfahren gemäß den Merkmalen des Patentanspruches 1, ein Computerprogrammprodukt gemäß den Merkmalen des Patentanspruches 9, ein Steuergerät gemäß den Merkmalen des Patentanspruches 10 und ein Kommunikationsnetzwerk gemäß den Merkmalen des Patentanspruches 12. Vorteilhafte Ausgestaltungen ergeben sich aus den abhängigen Patentansprüchen.

Die Erfindung schafft ein Verfahren zum Betrieb eines Kommunikationsnetzwerks eines Kraftfahrzeugs, wobei das Kommunikationsnetzwerk eine Mehrzahl an Steuergeräten umfasst, die an einen Datenbus angeschlossen sind und über diesen Nachrichten miteinander austauschen können. Die Mehrzahl an Steuergeräten ist an eine Spannungsquelle angeschlossen und weist eine Spannungsmesseinrichtung zur Ermittlung der an ihren Versorgungsanschlüssen anliegenden Spannung auf. Ferner kann die Mehrzahl an Steuergeräten auf einen zentralen und/oder internen Fehlerspeicher zumindest schreibend zugreifen, um darin eine Information über einen durch das betreffende Steuergerät detektierten Fehler zu dokumentieren.

Das Verfahren umfasst die folgenden Schritte:
a) Ermitteln der globalen Versorgungsspannung der Spannungsquelle;
b) Überprüfen, ob die ermittelte globale Versorgungsspannung eine vorgegebene obere Spannungsschwelle überschreitet oder eine vorgegebene untere Spannungsschwelle unterschreitet;
c) Bereitstellen einer die ermittelte globale Versorgungsspannung und/oder eine die Über- oder Unterschreitung repräsentierenden Information an die Steuergeräte;
d) bei der Detektion eines Fehlers durch ein jeweiliges Steuergerät, Durchführen einer Überprüfung anhand der bereitgestellten Information, ob die globale Versorgungsspannung die betreffende Spannungsschwelle über- oder unterschreitet;
e) beim Vorliegen einer Über- oder Unterschreitung der globalen Versorgungsspannung der betreffenden Spannungsschwelle ein jeweiliges Steuergerät bei der Detektion eines Fehlers anstelle eine den detektierten Fehler repräsentierende Information eine die Über- oder Unterschreitung der globalen Versorgungsspannung der betreffenden Spannungsschwelle repräsentierende Information als mögliche Ursache für den Fehler in seinen Fehlerspeicher schreibt.

Die zentrale Verteilung der aktuellen Spannungssituation der Spannungsquelle (Batterie) des Kraftfahrzeugs ermöglicht es, die Ursache eines Fehlerspeichereintrages besser zu unterscheiden. Insbesondere werden hierdurch Folgefehler von Kommunikationsproblemen bei globaler Unterspannung explizit mittels einem die globale Unterspannung kennzeichnenden Fehlerspeichereintrag kenntlich gemacht. Dies gibt einen Hinweis in Richtung der Batteriespannung, hat jedoch keine Reparaturanweisung bezüglich des Steuergeräts zur Folge. Lediglich echte Fehler am Steuergerät, Stecker oder am Kabelbaum werden einem Steuergerät selbst zugerechnet. Im Ergebnis ergibt sich eine vereinfachte Fehlerdiagnose. Darüber hinaus können Kosten bei der Reparatur der Kraftfahrzeuge eingespart werden.

Gemäß einer vorteilhaften Ausgestaltung erfolgt die Ermittlung der Versorgungsspannung der Spannungsquelle in Schritt a) und/oder die Überprüfung, ob die ermittelte globale Versorgungsspannung die vorgegebene obere Spannungsquelle überschreitet oder die vorgegebene untere Spannungsschwelle unterschreitet (Schritt b)), zentral. Die Bereitstellung der Information gemäß Schritt c) an die Steuergeräte erfolgt über eine über den Datenbus übertragene Nachricht. Die zentrale Erfassung der globalen Spannung ist konstruktiv nicht nur einfach, sondern erlaubt es auch, die Spannung mit größtmöglicher Genauigkeit zu messen. Insbesondere ist es zweckmäßig, wenn das die globale Spannung messende Steuergerät direkt an die Spannungsquelle angeschlossen ist und/oder in unmittelbarer räumlicher Nähe der Spannungsquelle angeordnet ist.

Es ist weiterhin zweckmäßig, wenn die Schritte b) und c) in zyklischen Abständen durchgeführt werden. Dies hat zur Folge, dass auch dann, wenn keine Über- oder Unterschreitung der Schwellenwerte vorliegt, eine entsprechende Information den Steuergeräten zur Verfügung gestellt wird. Hierdurch kann durch die die Information empfangenen Steuergeräte beim Ausbleiben der Information auf einen Defekt des zentralen Steuergeräts oder der Datenbuskommunikation geschlossen werden. Die Durchführung der Schritte b) und c) in zyklischen Abständen erhöht damit die Sicherheit der Diagnose von Fehlern und die Korrektheit der daraus resultierenden Fehlerspeichereinträge.

Gemäß einer weiteren zweckmäßigen Ausgestaltung wird durch ein jeweiliges Steuergerät bei der Detektion eines durch das Steuergerät verursachten internen Fehlers
aa) vor Schritt d) ermittelt, ob eine ermittelte lokale Versorgungsspannung eine vorgegebene obere Spannungsschwelle überschreitet oder eine vorgegebene untere Spannungsschwelle unterschreitet;
bb) überprüft, ob die Bedingung in Schritt e) erfüllt ist;
cc) bei der Feststellung, dass Schritt e) nicht erfüllt ist, bei der Detektion des durch das Steuergerät verursachten internen Fehlers anstelle eine den detektierten Fehler repräsentierende Information an eine die Über- oder Unterschreitung der lokalen Versorgungsspannung der betreffenden Spannungsschwelle repräsentierende Information als mögliche Ursache für den internen Fehler in den Fehlerspeicher geschrieben.

Diese Ausgestaltung ermöglicht eine Unterscheidung zwischen Fehlern, welche aufgrund einer globalen oder lokalen Über bzw. Unterspannung hervorgerufen sein könnten. Hierdurch wird die Genauigkeit der Fehlerdiagnose weiter verbessert.

In einer weiteren zweckmäßigen Ausgestaltung erfolgt die Bereitstellung einer die ermittelte globale Versorgungsspannung und/oder einer die Ober- oder Unterschreitung repräsentierenden Information an die Steuergeräte mittels einer über den Datenbus übertragenen Nachricht in einer Bitfolge, in der das Setzen eines Flags an vorgegebener Stelle der Bitfolge das Über- oder Unterschreiten der globalen Spannungsversorgung der betreffenden Spannungsschwelle signalisiert.

Die Bereitstellung der ermittelten globalen Versorgungsspannung ist gleichzusetzen mit der analogen Übertragung der gemessenen Spannung. Dies hat zur Folge, dass Schritt b) durch die Steuergeräte dann selbst durchgeführt werden kann. Konkret bedeutet dies, dass die Überprüfung, ob die ermittelte globale Versorgungsspannung eine vorgegebene obere Spannungsschwelle überschreitet oder eine vorgegebene untere Spannungsschwelle unterschreitet, durch die Steuergeräte durchgeführt wird.

Demgegenüber hat die Übertragung der Information an die Steuergeräte in einer Bitfolge den Vorteil, dass die Bewertung der Über- oder Unterschreitung durch das die Messung vornehmende Steuergerät erfolgt. Bei einer Änderung der Spannungsschwellen ist es damit ausreichend, diese Änderung lediglich in dem die Spannungsmessung vornehmenden Steuergerät vorzusehen. Letztere Variante bietet damit Vorteile in der Administration.

Die Erfindung schafft weiter ein Computerprogrammprodukt, das direkt in den internen Speicher eines digitalen Steuergeräts geladen werden kann und Softwarecodeabschnitte umfasst, mit denen folgende Schritte ausgeführt werden, wenn das Produkt auf dem Steuergerät eines Kommunikationsnetzwerks eines Kraftfahrzeugs läuft:
a) Empfangen einer zentral ermittelten globalen Versorgungsspannung und/oder einer eine Überschreitung einer vorgegebenen oberen Spannungsschwelle oder eine Unterschreitung einer vorgegebenen unteren Spannungsschwelle repräsentierenden Information;
b) bei der Detektion eines Fehlers durch das Steuergerät eine Überprüfung anhand der bereitgestellten Informationen durchgeführt wird, ob die globale Versorgungsspannung die betreffende Spannungsschwelle über oder unterschreitet;
c) beim Vorliegen einer Über- oder Unterschreitung der globalen Versorgungsspannung der betreffenden Spannungsschwelle das Steuergerät bei der Detektion eines Fehlers anstelle eine den detektierten Fehler repräsentierende Information eine die Über- oder Unterschreitung der globalen Versorgungsspannung der betreffenden Spannungsschwelle repräsentierende Information als mögliche Ursache für den Fehler in seinen Fehlerspeicher schreibt.

In einer weiteren zweckmäßigen Ausgestaltung ist das Computerprogrammprodukt ferner zur Durchführung weiterer Schritte des oben beschriebenen Verfahrens ausgebildet.

Die Erfindung schafft weiter ein Steuergerät für ein Kommunikationsnetzwerk eines Kraftfahrzeugs, wobei das Kommunikationsnetzwerk eine Mehrzahl an Steuergeräten umfasst, die an einen Datenbus angeschlossen sind und über diesen Nachrichten miteinander austauschen können. Das Steuergerät ist an eine Spannungsquelle angeschlossen und weist eine Spannungsmesseinrichtung zur Ermittlung der an ihren Versorgungsanschlüssen anliegenden Spannung auf. Die Steuergeräte können jeweils auf einen zentralen und/oder internen Fehlerspeicher zumindest schreibend zugreifen, um darin eine Information über einen durch das betreffende Steuergerät detektierten Fehler zu dokumentieren. Das Steuergerät ist zur Durchführung folgender Schritte ausgebildet:
a) Empfangen einer zentral ermittelten globalen Versorgungsspannung und/oder einer eine Überschreitung einer vorgegebenen oberen Spannungsschwelle oder eine Unterschreitung einer vorgegebenen unteren Spannungsschwelle repräsentierenden Information;
b) bei der Detektion eines Fehlers durch das Steuergerät eine Überprüfung anhand der bereitgestellten Informationen durchzuführen, ob die globale Versorgungsspannung die betreffende Spannungsschwelle über- oder unterschreitet;
c) beim Vorliegen einer Über- oder Unterschreitung der globalen Versorgungsspannung der betreffenden Spannungsschwelle das Steuergerät bei der Detektion eines Fehlers anstelle eine den detektierten Fehler repräsentierende Information eine die Über- oder Unterschreitung der globalen Versorgungsspannung der betreffenden Spannungsschwelle repräsentierende Information als mögliche Ursache für den Fehler in seinen Fehlerspeicher zu schreiben.

Gemäß einer weiteren zweckmäßigen Ausgestaltung ist das Steuergerät dazu ausgebildet, weitere Schritte gemäß dem oben beschriebenen Verfahren auszuführen.

Schließlich schafft die Erfindung ein Kommunikationsnetzwerk eines Kraftfahrzeugs, wobei das Kommunikationsnetzwerk eine Mehrzahl an Steuergeräten umfasst, die an einen Datenbus angeschlossen sind und über diesen Nachrichten miteinander austauschen können, wobei die Mehrzahl an Steuergeräten in oben beschriebener Weise ausgebildet ist.

Die Erfindung wird nachfolgend näher anhand von Beispielen in der Zeichnung beschrieben. Es zeigen:
- Fig. 1: eine schematische Darstellung eines erfindungsgemäßen Kommunikationsnetzwerks mit einer Anzahl an erfindungsgemäßen Steuergeräten,
- Fig. 2: eine schematische Darstellung des Ablaufs des erfindungsgemäßen Verfahrens in einem Steuergerät bei einem externen Fehler,
- Fig. 3: eine schematische Darstellung eines Schritts des Ablaufs des Verfahrens von Fig. 2, und
- Fig. 4: eine schematische Darstellung des Ablaufs des erfindungsgemäßen Verfahrens in einem Steuergerät bei einem internen Fehler,

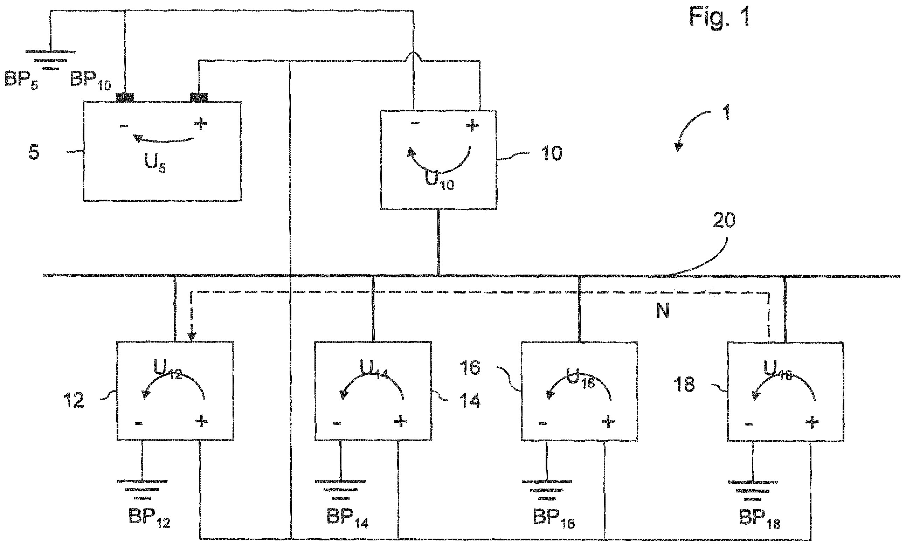

Fig. 1 zeigt eine schematische Darstellung eines beispielhaften erfindungsgemäßen Kommunikationsnetzwerks 1 eines Kraftfahrzeugs. Das Kommunikationsnetzwerk 1 umfasst beispielhaft fünf Steuergeräte 10, 12, 14, 16, 18, die jeweils an einen Datenbus 20 angeschlossen sind und über diesen Nachrichten austauschen können. Das Steuergerät 10 stellt eine zentrale Steuereinheit (Electronic Control Unit) dar, wie bspw. ein digitales Motormanagement. Die übrigen Steuergeräte 12, 14, 16, 18 sind Steuergeräte, welche bspw. für die Regelung eines adaptiven Fahrwerks verwendet werden. Hierzu notwendige Aktoren oder Sensoren sind der Einfachheit halber nicht dargestellt. Prinzipiell können die an den Datenbus 20 angeschlossenen Steuergeräte jedoch auch eine beliebige andere Funktion aufweisen.

Ferner dargestellt ist eine Spannungsquelle 5 (Batterie bzw. Akkumulator) mit einem positiven ("+") und einem negativen ("-") Versorgungsanschluss. Zwischen dem positiven und dem negativen Versorgungsanschluss liegt eine Versorgungsspannung U₅ an. Der negative Versorgungsanschluss ist mit einem Bezugspotenzial, in der Regel einem Karosseriebauteil verbunden. Dieses ist in Fig. 1 mit dem Bezugszeichen BP₅ gekennzeichnet.

Jeweilige positive ("+") Versorgungsanschlüsse der Steuergeräte 10, 12, 14, 16, 18 sind mit dem positiven Versorgungsanschluss der Spannungsquelle 5 verbunden. Der negative ("-") Versorgungsanschluss des Steuergeräts 10, d.h. dessen Bezugspotentialanschluss, ist unmittelbar mit dem negativen Versorgungsanschluss der Batterie 5 verbunden. Die negativen Versorgungsanschlüsse ("-") der Steuergeräte 12, 14, 16, 18 sind in der Regel mit einem in ihrer Nähe befindlichen Karosseriebauteil gekoppelt, sodass diese ein jeweiliges Bezugspotenzial von BP₁₂, BP₁₄, BP₁₆ und BP₁₈ aufweisen. Da sämtliche Karosseriebauteile elektrisch miteinander verbunden sind, ist das Bezugspotenzial BP₅, BP₁₂, BP₁₄, BP₁₆, BP₁₈ theoretisch identisch. Aufgrund der unterschiedlichen elektrischen Leitfähigkeit einzelner Karosseriebereiche kann sich in der Praxis jedoch ein unterschiedliches Bezugspotenzial ergeben.

Jedes der Steuergeräte 10, 12, 14, 16, 18 weist eine (nicht näher dargestellte) Spannungsmesseinrichtung zur Ermittlung der an ihren Versorgungsanschlüssen anliegenden Spannung U₁₀, U₁₂, U₁₄, U₁₆, U₁₈ auf. Aufgrund der bereits erwähnten tatsächlichen unterschiedlichen Bezugspotenziale sowie der mit zunehmender Entfernung vom positiven Versorgungsanschluss der Batterie abfallenden Spannung, weisen die Steuergeräte 10, 12, 14, 16, 18 eine tatsächlich unterschiedliche lokale Versorgungsspannung U₁₀, U₁₂, U₁₄, U₁₆, U₁₈ auf.

Die Funktionsfähigkeit des Kommunikationsnetzwerks 1 ist so lange gewährleistet, so lange keine Unterspannung vorliegt. Unterspannung heißt, dass die jeweilige lokale Versorgungsspannung U₁₀, U₁₂, U₁₄, U₁₆, U₁₈ der Steuergeräte 10, 12, 4, 16, 18 kleiner ist als ein unterer, lokaler Spannungsschwellwert. In der Regel liegt dann eine Unterspannung vor, wenn die lokale Versorgungsspannung geringer als 9 V ist. Unterhalb dieser Spannung arbeiten zwar die Prozessoren der Steuergeräte und der Datenbus typischer Weise weiter, sodass eine Kommunikation zwischen den Steuergeräten u.U. noch erfolgen kann. Allerdings können u.U. an den Steuergeräten angebundene Sensoren oder Aktoren unterhalb der unteren, lokalen Spannungsschwelle nicht mehr bestimmungsgemäß arbeiten, sodass die von diesen gewonnenen Messwerten fehlerhaft sind.

Korrespondierend hierzu ist für eine sog. lokale Überspannung eine obere, lokale Spannungsschwelle für jedes der Steuergeräte 10, 12, 14, 16, 18 definiert. Eine Überspannung liegt dann vor, wenn die lokale Versorgungsspannung U₁₀, U₁₂, U₁₄, U₁₆, U₁₈ zwischen den Versorgungsanschlüssen größer als 16 V ist. Für eine bestimmte Zeitdauer, z.B. 200 ms, darf die Spannung auch 18 V betragen. Oberhalb der genannten Spannungsgrenzen könnte eine Beschädigung oder Zerstörung der Steuergeräte erfolgen. Eine solche Situation tritt bspw. dann auf, wenn das Kraftfahrzeug zwecks Starthilfe mit der Batterie eines anderen Fahrzeuges, insbesondere eines Lastkraftwagens, verbunden ist.

Jedes der Steuergeräte 10, 12, 14, 16, 18 weist darüber hinaus einen nicht näher dargestellten Fehlerspeicher auf, in den eine Information über eine durch das betreffende Steuergerät detektierten Fehler eingeschrieben werden kann. Ein derartiger Eintrag wird als Fehlerspeichereintrag bezeichnet und dokumentiert die originäre Ursache einer Funktionseinschränkung des Steuergerätes. Ein Fehlerspeichereintrag ist, um die Ursache des Fehlers ausfindig machen zu können, daher immer ursachenbezogen. In einer Abwandlung könnte auch ein zentraler Fehlerspeicher vorgesehen sein, in den die Steuergeräte ermittelte Fehler einschreiben können.

Ein Fehlerspeichereintrag steht immer dann im lokalen Kontext, wenn eine im betreffenden Steuergerät 10, 12, 14, 16, 18 enthaltene Fehlerüberwachungseinheit einen Fehler detektiert und eine üblicherweise vorhandene Fehlerbehandlungsroutine aufruft. Ein Fehlerspeichereintrag kann jedoch auch durch einen außerhalb des betreffenden Steuergeräts auftretenden Fehler verursacht sein. Dies kann bspw. ein von einem anderen Steuergerät erhaltener, fehlerhafter Messwert sein, welcher durch das betreffende Steuergerät weiter verarbeitet wird. Eine fehlerhaft übertragene Nachricht von einem Steuergerät an das empfangende, den Fehlerspeichereintrag erzeugendes Steuergerät, steht ebenfalls im globalen Zusammenhang. Schließlich werden auch solche Fehlerspeichereinträge als global betrachtet, bei denen die Absenkung der globalen Versorgungsspannung zu einer Verletzung der lokalen Versorgungsspannung führt.

Bei einer Versorgungsspannung U₅ von mehr als 11 V ist im Normalbetrieb des Kraftfahrzeugs eine bestimmungsgemäße Spannungsversorgung sämtlicher Steuergeräte 10, 12, 14, 16, 18 sichergestellt. Verfügt das Kraftfahrzeug über eine Motor-Start-Stopp-Automatik (MSA), so wird eine Spannung von z.B. mehr als 8,2 V während des Startens des Motors (sog. MSA-Start) als ausreichend erachtet. Die beiden genannten Spannungswerte für die globale Versorgungsspannung U₅ stellen jeweils eine untere, globale Spannungsschwelle dar. Wird im Normalbetrieb oder beim MSA-Start die jeweilige Spannungsschwelle unterschritten, so kann dies bspw. bei dem am weitesten von der Batterie 5 entfernten Steuergerät (hier: Steuergerät 18) zu einer lokalen Spannungsverletzung führen, d.h. die lokale Versorgungsspannung U₁₈ unterschreitet den lokalen unteren Spannungsschwellwert, sodass die Funktion des Steuergeräts nicht mehr bestimmungsgemäß sichergestellt ist. Demgegenüber können die übrigen Steuergeräte 12, 14, 16 aufgrund ihrer größeren räumlichen Nähe zu der Batterie 5 noch innerhalb ihres zulässigen Spannungsbereichs betrieben werden.

In einer derartigen Situation bleibt entweder eine bspw. von dem Steuergerät 12 erwartete Nachricht N des Steuergeräts 18 aus. Ebenso ist es möglich, dass das Steuergerät 18 noch in der Lage ist, eine Nachricht an das Steuergerät 12 zu senden, die darin enthaltenen Informationen jedoch fehlerhaft sind. Um zu verhindern, dass das Steuergerät 12 aufgrund des von ihm detektierten Fehlers in seinem Fehlerspeicher einen Fehlerspeichereintrag erzeugt, der eine Information über das Ausbleiben der Nachricht oder eine fehlerhafte Nachricht repräsentiert, sieht die Erfindung das Einbeziehen einer Information über die globale Versorgungsspannung U₅ der Batterie des Kraftfahrzeugs vor.

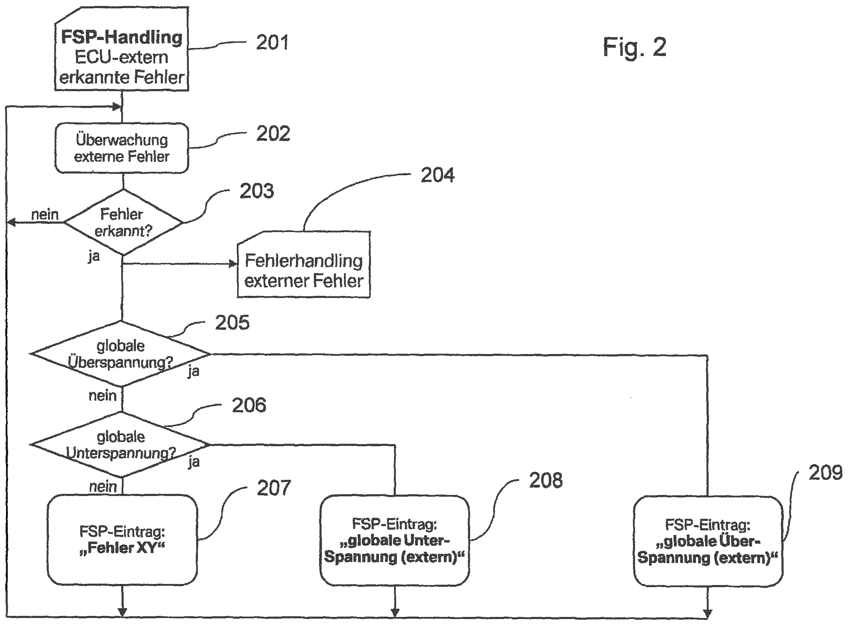

Die in den nachfolgenden Fig. 2 bis 4 beschriebenen Verfahrensabläufe basieren auf dem Prinzip einer zentralen Spannungsmessung und -überwachung auf das Über- bzw. Unterschreiten der oberen und unteren globalen Spannungsschwelle. Die zentrale Spannungsmessung erfolgt durch das Steuergerät 10, das in unmittelbarer räumlicher Nähe zu der Batterie 5 angeordnet ist und direkt mit den Versorgungsanschlüssen der Batterie 5 verbunden ist. Ebenso könnte eine der Batterie 5 zugeordnete Batterieüberwachungseinheit die Funktion der Spannungsmessung übernehmen.

Vorzugsweise wird nach der Spannungsmessung durch das Steuergerät 10 überprüft, ob die gemessene globale Versorgungsspannung U₅ die vorgegebene obere Spannungsschwelle überschreitet oder die vorgegebene untere Spannungsschwelle unterschreitet. Eine entsprechende Information des Ergebnisses wird mittels einer über den Datenbus 20 übertragenen Nachricht an sämtliche an den Datenbus 20 angeschlossene Steuergeräte, hier: 12, 14, 16, 18, übermittelt. Vorzugsweise wird nicht die gemessene Spannung direkt in der Nachricht übertragen, sondern eine Bitfolge, in der das Setzen eines Flags an vorgegebener Stelle der Bitfolge das Über- oder Unterschreiten der globalen Spannungsversorgung der betreffenden Spannungsschwelle signalisiert. Beispielsweise signalisiert Bit 1 eine erkannte globale Unterspannung für den Normalbetrieb (d.h. eine Unterschreitung der Spannung von 11 V). Bit 2 signalisiert bspw. eine Unterspannung während des MSA-Starts, d.h. eine Unterschreitung der Spannung von 8,2 V. Bit 3 signalisiert bspw. eine Überspannung, wobei eine Spannung von 16 bzw. 18 V für mehr als 200 ms überschritten ist. Um der in dem Energiebordnetz stattfindenden Dynamik Rechnung zu tragen, kann vorgesehen sein, die entsprechenden Spannungsschwellen mit einer Hysterese zu versehen.

Bei der Detektion eines Fehlers nehmen die den Fehler detektierenden Steuergeräte eine lokale Bewertung der über die globale Batteriespannung vorliegenden Informationen vor, wobei die globale Versorgungsspannung als mögliche Ursache für den aufgetretenen Fehler in Betracht gezogen wird. Hierdurch ist es möglich, einen ursachenbezogenen und eindeutigen Fehlerspeichereintrag, abhängig vom Kontext des Steuergeräts, bei Eintritt des Fehlers zu realisieren.

Die Fig. 2 bis 4 illustrieren nun im Detail die in einem jeweiligen Steuergerät vorgenommene Prüfung in Abhängigkeit davon, ob der durch das Steuergerät erkannte Fehler außerhalb des Steuergeräts oder in diesem selbst verursacht ist. Externe Fehler sind in diesem Zusammenhang im wesentlichen Netzwerkfehler, wie etwa Ungültigkeiten, Überwachungen zu Nutzsignal-Qualifizierungs-Kennzeichnungen, etc. Denkbar sind auch andere externe Fehler, wie etwa eine Überwachung eines Signals, das physikalisch über eine dedizierte Leitung übertragen wird oder ähnliches. Grundsätzlich braucht bei externen Fehlern nichts direkt an der eintragenden Komponente oder deren Peripherie repariert werden. Interne Fehler sind Fehler, die überwachten Elementen im Steuergerät zugeordnet sind (z.B. ein Sensor). Diese Erfindung behandelt solche internen Fehler, die eine Spannungsabhängigkeit besitzen, also bei Unterspannung zuschlagen können, obwohl die überwachten Elemente nicht defekt sind.

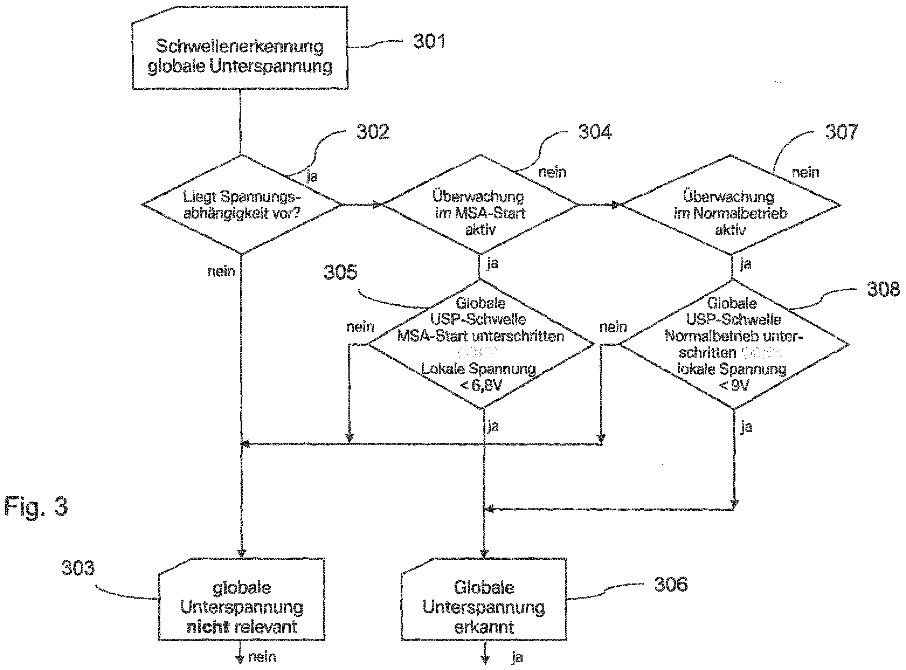

Fig. 2 illustriert den Ablauf eines Fehlerspeichereintrags bei einem außerhalb des das Verfahren ausführenden Steuergeräts auftretenden Fehler, bspw. einer ausbleibenden oder einer fehlerhaften Nachricht (Schritt 201). Ein solcher Fehler kann z.B. durch eine Unterspannung in dem sendenden Steuergerät verursacht sein. In Schritt 202 erfolgt eine Überwachung auf einen externen Fehler der oben beschriebenen Art. Wurde in Schritt 203 ein Fehler erkannt, so erfolgt in Schritt 204 eine vorgegebene Fehlerbehandlung des externen Fehlers. Ferner wird in Schritt 205 überprüft, ob die globale Versorgungsspannung U₅ den vorgegebenen oberen Schwellwert überschritten hat. Die Überprüfung erfolgt anhand der Auswertung der von dem Steuergerät 10 in zyklischen Abständen übertragenen Bitfolge. Liegt eine Schwellwertverletzung vor, so erfolgt in Schritt 209 ein Fehlerspeichereintrag ("globale Überspannung (extern)"), der eine globale Überspannung aufgrund eines externen Fehlers signalisiert. Überschreitet die globale Versorgungsspannung U₅ den vorgegebenen oberen globalen Spannungsschwellwert nicht, so erfolgt in Schritt 206 eine Überprüfung, ob die globale Versorgungspannung U₅ die untere, globale Spannungsschwelle unterschreitet. Der hierbei im Detail durchgeführte Verfahrensablauf wird näher in Verbindung mit Fig. 3 beschrieben. Die Erkennung einer globalen Unterspannung durch das Steuergerät erfolgt wiederum durch die Auswertung der von dem Steuergerät 10 an die übrigen Steuergeräte übertragenen Bitfolge. Liegt eine globale Unterspannung vor, so wird in Schritt 208 ein Fehlerspeichereintrag in den Fehlerspeicher geschrieben, der eine globale Unterspannung aufgrund eines außerhalb des Steuergeräts resultierenden Fehlers signalisiert ("globale Unterspannung (extern)"). Liegt keine globale Unterspannung vor, so wird in Schritt 207 ein Fehlerspeichereintrag erzeugt, der den detektierten Fehler repräsentiert.

Fig. 3 illustriert den Ablauf bei der Überprüfung, ob eine globale Unterspannung vorliegt. Hierbei wird in Schritt 302 zunächst überprüft, ob der durch das Steuergerät festgestellte Fehler eine Spannungsabhängigkeit aufweisen kann. Diese Unterscheidung ist erforderlich, da in einem Kraftfahrzeug manche Nachrichten oder Messsignale unabhängig von einer Spannung der Batterie sind. Eine Spannungsunabhängige Überwachung ist z.B. eine ROM-Überwachung, wobei ein detektierter Fehler immer in den Fehlerspeicher geschrieben werden soll. Liegt keine Spannungsabhängigkeit vor, so ist die Überprüfung der globalen Unterspannung nicht relevant (Schritt 303), so dass im Ablauf gemäß Fig. 2 mit Schritt 207 fortgefahren wird. Liegt demgegenüber eine Spannungsabhängigkeit vor, so erfolgt in den Schritten 304 und 307 zunächst eine Auswahl der aktuell gültigen unteren globalen Spannungsschwelle. In Schritt 304 wird überprüft, ob ein MSA-Start aktiv ist. Ist dies nicht der Fall, so liegt ein Normalbetrieb vor, welcher weiter in Schritt 307 behandelt wird. In Abhängigkeit von der nun gültigen unteren Spannungsschwelle (8,2 V für Schritt 304 sowie 11 V für Schritt 307) wird in den Schritten 305 und 308 überprüft, ob die jeweils gültige Schwelle unterschritten ist oder die lokale Spannung eine lokale Spannungsschwelle von 6,8 V bzw. 9 V unterschritten hat. Letzteres kann bspw. durch eine Messung der Versorgungsspannung U12 des Steuergeräts 12 erfolgen. Durch die alternative Berücksichtigung der globalen Spannungsschwelle oder der lokalen Spannungsschwelle soll dem Umstand Rechnung getragen werden, dass es unter Umständen (bspw. einem Kurzschluss in räumlicher Nähe des Steuergerätes) dazu kommen kann, dass bspw. die Spannung U12 des Steuergerätes schneller absinkt als an der Batterie, an der dieses kurze Problem eventuell gar nicht messbar ist. In solchen Fällen kann aufgrund des niedrigen unteren lokalen Spannungsschwellwertes darauf geschlossen werden, dass auch anderen Steuergeräte nicht ausreichend versorgt werden und es sich auch in diesem Fall um ein globales Problem handelt, auch wenn die durch das Steuergerät 10 gemessene Spannung dies nicht erkennen lässt. Für den Fall, dass in Schritt 305 bzw. 308 eine der genannten Schwellen unterschritten, ist, wurde eine globale Unterspannung erkannt (Schritt 306). Das weitere Vorgehen folgt gemäß dem Ablauf der Fig. 2 dem Pfad "ja". Andernfalls wird mit Schritt 303 fortgefahren.

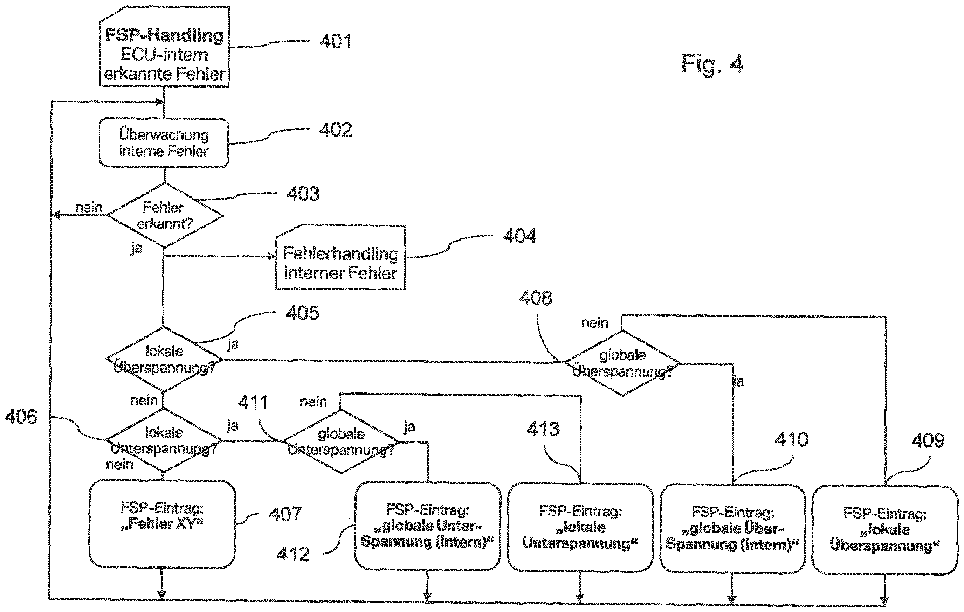

Fig. 4 zeigt den Ablauf in einem Steuergerät, wenn ein steuergerät-interner Fehler erkannt wurde (401). In Schritt 402 erfolgt eine Überwachung auf einen internen Fehler. Wurde in Schritt 403 kein Fehler erkannt, beginnt Schritt 402 von neuem. Wurde in Schritt 403 ein Fehler erkannt, so erfolgt in Schritt 404 eine Behandlung des internen Fehlers. Gleichzeitig wird überprüft, ob eine lokale Überspannung vorliegt (Schritt 405). Dabei wird ein oberer lokaler Spannungsschwellwert mit der durch das Steuergerät gemessenen lokalen Versorgungsspannung (U₁₂, U₁₄, U₁₆, U₁₈) verglichen. Liegt eine lokale Überspannung vor, so wird in Schritt 408 überprüft, ob eine Information über eine globale Überspannung vorliegt. Ist dies nicht der Fall, so erfolgt in Schritt 409 ein Fehlerspeichereintrag, der eine lokale Überspannung kennzeichnet ("lokale Überspannung"). Liegt demgegenüber eine Information über eine globale Überspannung in Schritt 408 vor, so erfolgt in Schritt 410 ein Fehlerspeichereintrag, der eine globale Überspannung aufgrund eines internen Fehlers signalisiert ("globale Überspannung (intern)"). Die Information über die globale Überspannung in Schritt 408 erfolgt wiederum durch das Auslesen der von dem zentralen Steuergerät 10 übertragenen Bitfolge.

Konnte eine lokale Überspannung in Schritt 405 nicht identifiziert werden, so wird in Schritt 406 überprüft, ob eine lokale Unterspannung vorliegt. Ist dies nicht der Fall, so erfolgt ein Fehlerspeichereintrag, der eine Information über den detektierten Fehler repräsentiert ("Fehler XY"). Die Überprüfung, ob eine lokale Unterspannung vorliegt, erfolgt wiederum durch Messung der Versorgungsspannung an den Klemmen des die Prüfung durchführenden Steuergeräts mit einem unteren, lokalen Spannungsschwellwert. Liegt in Schritt 406 eine lokale Unterspannung vor, so erfolgt in Schritt 411 eine Überprüfung, ob eine Information über eine globale Unterspannung gegeben ist. Ist dies der Fall, so erfolgt ein Fehlerspeichereintrag, der eine globale Unterspannung aufgrund eines internen Fehlers repräsentiert ("globale Unterspannung (intern)"). Liegt keine Information über eine globale Unterspannung in Schritt 411 vor, so erfolgt in Schritt 413 ein Fehlerspeichereintrag, der eine lokale Unterspannung repräsentiert ("lokale Unterspannung"). Eine globale Unterspannung aufgrund eines internen Fehlers kann bspw. auf Probleme der Batterie 5 zurückzuführen sein. Ein Fehlerspeichereintrag, der eine lokale Unterspannung repräsentiert, kann auf ein Problem in der Verkabelung oder in der Verbindung der Steuergeräte zum Datenbus hinweisen.

## Patentansprüche

1. Verfahren zum Betrieb eines Kommunikationsnetzwerks (1) eines Kraftfahrzeugs, wobei das Kommunikationsnetzwerk (1) eine Mehrzahl an Steuergeräten (10, 12, 14, 16, 18) umfasst, die an einen Datenbus (20) angeschlossen sind und über diesen Nachrichten (N) miteinander austauschen können, wobei die Mehrzahl an Steuergeräten (10, 12, 14, 16, 18)
- an eine Spannungsquelle (5) angeschlossen ist;
- eine Spannungsmesseinrichtung zur Ermittlung der an ihren Versorgungsanschlüssen anliegenden Spannung (U₁₀, U₁₂, U₁₄, U₁₆, U₁₈) aufweist; und
- auf einen zentralen und/oder internen Fehlerspeicher zumindest schreibend zugreifen kann, um darin eine Information über einen durch das betreffende Steuergerät (10, 12, 14, 16, 18) detektierten Fehler zu dokumentieren,
wobei das Verfahren die folgenden Schritte umfasst:
a) Ermitteln der globalen Versorgungsspannung (U₅) der Spannungsquelle (5);
b) Überprüfen, ob die ermittelte globale Versorgungsspannung (U₅) eine vorgegebene obere Spannungsschwelle überschreitet oder eine vorgegebene untere Spannungsschwelle unterschreitet;
c) Bereitstellen einer die ermittelte globale Versorgungsspannung (U₅) und/oder einer die Über- oder Unterschreitung repräsentierenden Information an die Steuergeräte (10, 12, 14, 16, 18);
d) bei der Detektion eines Fehlers durch ein jeweiliges Steuergerät (10, 12, 14, 16, 18) Durchführen einer Überprüfung anhand der bereitgestellten Information, ob die globale Versorgungsspannung (U₅) die betreffende Spannungsschwelle über- oder unterschreitet;
e) beim Vorliegen einer Über- oder Unterschreitung der globalen Versorgungsspannung (U₅) der betreffenden Spannungsschwelle ein jeweiliges Steuergerät (10, 12, 14, 16, 18) bei der Detektion eines Fehlers anstelle eine den detektierten Fehler repräsentierende Information eine die Über- oder Unterschreitung der globalen Versorgungsspannung (U₅) der betreffenden Spannungsschwelle repräsentierende Information als mögliche Ursache für den Fehler in seinen Fehlerspeicher schreibt.

2. Verfahren nach Anspruch 1, bei dem die Ermittlung der Versorgungsspannung (U₅) der Spannungsquelle (5) in Schritt a) und/oder die Überprüfung, ob die ermittelte globale Versorgungsspannung (U₅) die vorgegebene obere Spannungsschwelle überschreitet oder die vorgegebene untere Spannungsschwelle unterschreitet (Schritt b)), zentral erfolgt.

3. Verfahren nach Anspruch 1 oder 2, bei dem die Ermittlung der globalen Versorgungsspannung (U₅) der Spannungsquelle (5) durch ein Steuergerät (10) erfolgt, welches direkt an die Spannungsquelle (5) angeschlossen ist und/oder in unmittelbarer räumlicher Nähe der Spannungsquelle (5) angeordnet ist.

4. Verfahren nach einem der vorhergehenden Ansprüche, bei dem die Schritte b) und c) in zyklischen Abständen durchgeführt werden.

5. Verfahren nach einem der vorhergehenden Ansprüche, bei dem der Wert der oberen und/oder der unteren Spannungsschwelle abhängig davon gewählt wird, ob ein Normalbetrieb oder ein zugelassener, die Spannungen der Kommunikationsnetzwerks beeinflussender, Betriebszustand vorliegt.

6. Verfahren nach einem der vorhergehenden Ansprüche, bei dem durch ein jeweiliges Steuergerät (10, 12, 14, 16, 18) bei der Detektion eines durch das Steuergerät (10, 12, 14, 16, 18) verursachten internen Fehlers
aa) vor Schritt d) ermittelt wird, ob eine ermittelte lokale Versorgungsspannung (U₁₀, U₁₂, U₁₄, U₁₆, U₁₈) eine vorgegebene obere Spannungsschwelle überschreitet oder eine vorgegebene untere Spannungsschwelle unterschreitet;
bb) überprüft wird, ob die Bedingung in Schritt e) erfüllt ist;
cc) bei der Feststellung, dass Schritt e) nicht erfüllt ist, bei der Detektion des durch das Steuergerät (10, 12, 14, 16, 18) verursachten internen Fehlers anstelle eine den detektierten Fehler repräsentierende Information eine die Über- oder Unterschreitung der lokalen Versorgungsspannung (U₁₀, U₁₂, U₁₄, U₁₆, U₁₈) der betreffenden Spannungsschwelle repräsentierende Information als mögliche Ursache für den internen Fehler in den Fehlerspeicher geschrieben wird.

7. Verfahren nach einem der vorhergehenden Ansprüche, bei dem die Bereitstellung einer die ermittelte globale Versorgungsspannung (U₅) und/oder einer die Über- oder Unterschreitung repräsentierenden Information an die Steuergeräte (10, 12, 14, 16, 18) mittels einer über den Datenbus (20) übertragenen Nachricht in einer Bitfolge erfolgt, in der das Setzen eines Flags an vorgegebener Stelle der Bitfolge das Über- oder Unterschreiten der globalen Spannungsversorgung (U₅) der betreffenden Spannungsschwelle signalisiert.

8. Computerprogrammprodukt, das direkt in den internen Speicher eines digitalen Steuergeräts (10, 12, 14, 16, 18) geladen werden kann und Softwarecodeabschnitte umfasst, mit denen folgende Schritte ausgeführt werden, wenn das Produkt auf dem Steuergerät (10, 12, 14, 16, 18) eines Kommunikationsnetzwerks eines Kraftfahrzeugs läuft:
a) Empfangen einer zentral ermittelten globalen Versorgungsspannung (U₅) und/oder einer eine Überschreitung einer vorgegebenen oberen Spannungsschwelle oder einer eine Unterschreitung einer vorgegebenen unteren Spannungsschwelle repräsentierenden Information;
b) bei der Detektion eines Fehlers durch das Steuergerät (10, 12, 14, 16, 18) eine Überprüfung anhand der bereitgestellten Information durchgeführt wird, ob die globale Versorgungsspannung (U₅) die betreffende Spannungsschwelle über- oder unterschreitet;
c) beim Vorliegen einer Über- oder Unterschreitung der globalen Versorgungsspannung (U₅) der betreffenden Spannungsschwelle das Steuergerät (10, 12, 14, 16, 18) bei der Detektion eines Fehlers anstelle eine den detektierten Fehler repräsentierende Information eine die Über- oder Unterschreitung der globalen Versorgungsspannung (U₅) der betreffenden Spannungsschwelle repräsentierende Information als mögliche Ursache für den Fehler in seinen Fehlerspeicher zu schreiben.

9. Computerprogrammprodukt nach Anspruch 8, das zur Durchführung der Schritte gemäß den Ansprüchen 2 bis 7 ausgebildet ist.

10. Steuergerät für ein Kommunikationsnetzwerk (1) eines Kraftfahrzeugs, wobei das Kommunikationsnetzwerk (1) eine Mehrzahl an Steuergeräten (10, 12, 14, 16, 18) umfasst, die an einen Datenbus (20) angeschlossen sind und über diesen Nachrichten (N) miteinander austauschen können, wobei das Steuergerät (10, 12, 14, 16, 18)
- an eine Spannungsquelle (5) **anschließbar** ist;
- eine Spannungsmesseinrichtung zur Ermittlung der an ihren Versorgungsanschlüssen anliegenden Spannung (U₁₀, U₁₂, U₁₄, U₁₆, U₁₈) aufweist; und
- auf einen zentralen und/oder internen Fehlerspeicher zumindest schreibend zugreifen kann, um darin eine Information über einen durch das betreffende Steuergerät (10, 12, 14, 16, 18) detektierten Fehler zu dokumentieren,
wobei dieses zur Durchführung folgender Schritte ausgebildet ist:
a) Empfangen einer zentral ermittelten globalen Versorgungsspannung (U₅) und/oder einer eine Überschreitung einer vorgegebenen oberen Spannungsschwelle oder einer eine Unterschreitung einer vorgegebenen unteren Spannungsschwelle repräsentierenden Information;
b) bei der Detektion eines Fehlers durch das Steuergerät (10, 12, 14, 16, 18) eine Überprüfung anhand der bereitgestellten Information durchgeführt wird, ob die globale Versorgungsspannung (U₅) die betreffende Spannungsschwelle über- oder unterschreitet;
c) beim Vorliegen einer Über- oder Unterschreitung der globalen Versorgungsspannung (U₅) der betreffenden Spannungsschwelle das Steuergerät (10, 12, 14, 16, 18) bei der Detektion eines Fehlers anstelle eine den detektierten Fehler repräsentierende Information eine die Über- oder Unterschreitung der globalen Versorgungsspannung (U₅) der betreffenden Spannungsschwelle repräsentierende Information als mögliche Ursache für den Fehler in seinen Fehlerspeicher zu schreiben.

11. Steuergerät nach Anspruch 10, das dazu ausgebildet ist, die Schritte gemäß den Ansprüchen 2 bis 7 auszuführen.

12. Kommunikationsnetzwerk eines Kraftfahrzeugs (1), wobei das Kommunikationsnetzwerk (1) eine Mehrzahl an Steuergeräten (10, 12, 14, 16, 18) umfasst, die an einen Datenbus (20) angeschlossen sind und über diesen Nachrichten (N) miteinander austauschen können, wobei die Mehrzahl an Steuergeräten (10, 12, 14, 16, 18) gemäß Anspruch 10 oder 11 ausgebildet ist.

## Claims

1. A method for operating a communication network (1) of a motor vehicle, wherein the communication network (1) comprises a plurality of control devices (10, 12, 14, 16, 18), which are connected to a data bus (20) and can exchange messages (N) with one another via said data bus, wherein the plurality of control devices (10, 12, 14, 16, 18)
- is connected to a voltage source (5);
- has a voltage measuring device for determining a voltage (U₁₀, U₁₂, U₁₄, U₁₆, U₁₈) applied to their supply connections; and
- can access a central and/or internal fault memory at least in a writing manner, in order to document therein information concerning a fault detected by the corresponding control device (10, 12, 14, 16, 18),
wherein the method comprises the following steps:
a) determining the global supply voltage (U₅) of the voltage source (5);
b) checking whether the determined global supply voltage (U₅) exceeds a predefined upper voltage threshold or falls below a predefined lower voltage threshold;
c) providing information representing the determined global supply voltage (U₅) and/or information representing the fact that this exceeds or falls below a threshold to the control devices (10, 12, 14, 16, 18);
d) when a fault is detected by a particular control device (10, 12, 14, 16, 18), checking, by use of the provided information, whether the global supply voltage (U₅) exceeds or falls below the voltage threshold in question;
e) in the case that the global supply voltage (U₅) exceeds or falls below the voltage threshold in question, the corresponding control device (10, 12, 14, 16, 18), when detecting a fault, instead of information representing the detected fault, writes into its fault memory information representing the fact that the global supply voltage (U₅) has exceeded or fallen below the voltage threshold in question as a possible cause of the fault.

2. A method according to claim 1, in which the determining of the supply voltage (U₅) of the voltage source (5) in step a) and/or the checking as to whether the determined global supply voltage (U₅) exceeds the predefined upper voltage threshold or falls below the predefined lower voltage threshold (step b)) are/is performed centrally.

3. A method according to claim 1 or 2, in which the determining of the global supply voltage (U₅) of the voltage source (5) is performed by a control device (10) which is directly connected to the voltage source (5) and/or is arranged in the immediate spatial vicinity of the voltage source (5).

4. A method according to any one of the preceding claims, in which steps b) and c) are performed at cyclical intervals.

5. A method according to any one of the preceding claims, in which the value of the upper and/or the lower voltage threshold is selected depending on whether a normal operation or a permitted operating state influencing the voltages of the communication network is present.

6. A method according to any one of the preceding claims, in which, by way of a particular control device (10, 12, 14, 16, 18), when an internal fault caused by the control device (10, 12, 14, 16, 18) is detected,
aa) it is determined before step d) whether a determined local supply voltage (U₁₀, U₁₂, U₁₄, U₁₆, U₁₈) exceeds a predefined upper voltage threshold or falls below a predefined lower voltage threshold;
bb) it is checked whether the condition in step e) has been met;
cc) when it is determined that step e) has not been met, when detecting the internal fault caused by the control device (10, 12, 14, 16, 18), instead of information representing the detected fault, information representing the fact that the local supply voltage (U₁₀, U₁₂, U₁₄, U₁₆, U₁₈) has exceeded or fallen below the voltage threshold in question is written into the fault memory as a possible cause of the internal fault.

7. A method according to any one of the preceding claims, in which information representing the determined global supply voltage (U₅) and/or information representing the fact that this exceeds or falls below a threshold is provided to the control devices (10, 12, 14, 16, 18) by means of a message transmitted by way of the data bus (20) in a bit string, in which the setting of a flag at a specified point of the bit string signals the fact that the global supply voltage (U₅) has exceeded or fallen below the voltage threshold in question.

8. A computer program product which can be loaded directly into the internal memory of a digital control device (10, 12, 14, 16, 18) and comprises software code portions by which the following steps can be carried out when the product is running on the control device (10, 12, 14, 16, 18) of a communication network of a motor vehicle:
a) receiving information representing a centrally determined global supply voltage (U₅) and/or information representing the fact that a predefined upper voltage threshold has been exceeded or a predefined lower voltage threshold has been fallen below;
b) when a fault is detected by the control device (10, 12, 14, 16, 18), checking, by use of the provided information, whether the global supply voltage (U₅) exceeds or falls below the voltage threshold in question;
c) when the global supply voltage (U₅) exceeds or falls below the voltage threshold in question, the control device (10, 12, 14, 16, 18), when detecting a fault, instead of information representing the detected fault, writes into its fault memory information representing the fact that the global supply voltage (U₅) has exceeded or fallen below the voltage threshold in question as a possible cause of the fault.

9. A computer program product according to claim 8, which is designed to carry out the steps according to claims 2 to 7.

10. A control device for a communication network (1) of a motor vehicle, wherein the communication network (1) comprises a plurality of control devices (10, 12, 14, 16, 18), which are connected to a data bus (20) and can exchange messages (N) with one another via said data bus, wherein the control device (10, 12, 14, 16, 18)
- can be connected to a voltage source (5);
- has a voltage measuring device for determining a voltage (U₁₀, U₁₂, U₁₄, U₁₆, U₁₈) applied to its supply connections; and
- can access a central and/or internal fault memory at least in a writing manner, in order to document therein information concerning a fault detected by the corresponding control device (10, 12, 14, 16, 18),
wherein this is designed to perform the following steps:
a) receive information representing a centrally determined global supply voltage (U₅) and/or information representing the fact that a predefined upper voltage threshold has been exceeded or a predefined lower voltage threshold has been fallen below;
b) when a fault is detected by the control device (10, 12, 14, 16, 18), check, by use of the provided information, whether the global supply voltage (U₅) exceeds or falls below the voltage threshold in question;
c) when the global supply voltage (U₅) exceeds or falls below the voltage threshold in question, the control device (10, 12, 14, 16, 18), when detecting a fault, instead of information representing the detected fault, writes into its fault memory information representing the fact that the global supply voltage (U₅) has exceeded or fallen below the voltage threshold in question as a possible cause of the fault.

11. A control device according to claim 10, which is designed to carry out the steps according to claims 2 to 7.

12. A communication network of a motor vehicle (1), wherein the communication network (1) comprises a plurality of control devices (10, 12, 14, 16, 18), which are connected to a data bus (20) and can exchange messages (N) with one another via said data bus, wherein the plurality of control devices (10, 12, 14, 16, 18) is configured in accordance with claim 10 or 11.

## Revendications

1. Procédé de gestion d'un réseau de communication (1) d'un véhicule, comportant un ensemble d'appareils de commande (10, 12, 14, 16, 18) qui sont connectés à un bus de données (20) et par lesquels des messages (N) peuvent être échangés, l'ensemble d'appareils de commande (10, 12, 14, 16, 18),
- étant connecté à une source de tension (5),
- comportant un dispositif de mesure de tension permettant de détecter la tension (U₁₀, U₁₂, U₁₄, U₁₆, U₁₈) appliquée à ses bornes d'alimentation, et
- pouvant accéder au moins en écriture à une mémoire de défaut centrale et/ou interne pour permettre de documenter dans celle-ci une information concernant un défaut détecté par l'appareil de commande (10, 12, 14, 16, 18) concerné,
ce procédé comprenant les étapes suivantes consistant à :
a) détecter la tension d'alimentation globale (U₅) de la source de tension (5),
b) vérifier si la tension d'alimentation globale (U₅) détectée dépasse un seuil de tension supérieur prédéfini ou passe au-dessous d'un seuil de tension inférieur prédéfini,
c) fournir aux appareils de commande (10, 12, 14, 16, 18) une information représentant la tension d'alimentation globale (U₅) détectée et/ou une information représentant le dépassement ou le passage en dessous,
d) en cas de détection d'un défaut par un appareil de commande (10, 12, 14, 16, 18) respectif effectuer une vérification à l'aide de l'information fournie pour vérifier si la tension d'alimentation globale (U₅) dépasse ou passe au-dessous du seuil de tension concerné,
e) lorsque la tension d'alimentation globale (U₅) dépasse ou passe au-dessous du seuil de tension concerné, un appareil de commande (10, 12, 14, 16, 18) respectif, écrit, dans sa mémoire de défaut lors de la détection d'un défaut à la place d'une information représentant le défaut détecté, une information représentant le dépassement ou le passage au-dessous du seuil de tension concerné de la tension d'alimentation globale (U₅) en tant que raison possible du défaut.

2. Procédé conforme à la revendication 1,
selon lequel la détection de la tension d'alimentation (U₅) de la source de tension (5) dans l'étape a) et/ou le contrôle du fait que la tension d'alimentation globale (U₅) détectée dépasse ou non le seuil de tension supérieur prédéfini ou passe au-dessous du seuil de tension inférieur prédéfini (étape b) est(sont) effectué(es) de façon centralisée.

3. Procédé conforme à la revendication 1 ou 2,
selon lequel la détection de la tension d'alimentation globale (U₅) de la source de tension (5) est effectuée par un appareil de commande (10) qui est directement connecté à la source de tension (5) et/ou est monté à proximité directe dans l'espace de cette source de tension (5).

4. Procédé conforme à l'une des revendications précédentes,
selon lequel les étapes b) et c) sont mises en oeuvre à distance cyclique.

5. Procédé conforme à l'une des revendications précédentes,
selon lequel la valeur du seuil de tension supérieur et/ou la valeur du seuil de tension inférieur est(sont) choisie(s) en fonction du fait que l'on se trouve en mode de fonctionnement normal ou dans un état de fonctionnement autorisé agissant sur les tensions du réseau de communication.

6. Procédé conforme à l'une des revendications précédentes,
selon lequel par l'intermédiaire d'un appareil de commande (10, 12, 14, 16, 18) respectif, lors de la détection d'un défaut interne provoqué par cet appareil de commande (10, 12, 14, 16, 18),
aa) avant l'étape d), on détecte si la tension d'alimentation locale détectée (U₁₀, U₁₂, U₁₄, U₁₆, U₁₈) dépasse un seuil de tension supérieur prédéfini ou passe au-dessous d'un seuil de tension inférieur prédéfini,
bb) on vérifie si la condition de l'étape e) est satisfaite,
cc) en cas de détermination du fait que l'étape e) n'est pas satisfaite, lors de la détection du défaut interne provoqué par l'appareil de commande (10, 12, 14, 16, 18), on écrit dans la mémoire de défaut, à la place d'une information représentant le défaut détecté, une information représentant le dépassement ou le passage en dessous du seuil de tension concerné par la tension d'alimentation locale (U₁₀, U₁₂, U₁₄, U₁₆, U₁₈) en tant que raison possible du défaut interne.

7. Procédé conforme à l'une des revendications précédentes,
selon lequel la fourniture d'une information représentant la tension d'alimentation globale (U₅) et/ou d'une information représentant un dépassement ou un passage au-dessous, à l'appareil de commande (10, 12, 14, 16, 18) est effectuée, au moyen d'un message transféré par un bus de données (20) dans une succession de bits dans laquelle la mise en place d'un drapeau à un endroit prédéfini de cette succession de bits signale le dépassement ou le passage en dessous du seuil de tension concerné par l'alimentation en tension globale (U₅).

8. Produit programme d'ordinateur pouvant être directement chargé dans la mémoire interne d'un appareil de commande numérique (10, 12, 14, 16, 18) comportant des instructions de code de programme permettant d'exécuter les étapes suivantes lorsque le produit se déroule sur l'appareil de commande (10, 12, 14, 16, 18) d'un réseau de communication d'un véhicule, consistant à :
a) recevoir une information représentant la tension d'alimentation globale (U₅) détectée de façon centralisée et/ou une information représentant un dépassement d'un seuil de tension supérieur prédéfini ou une information représentant un seuil de tension inférieur prédéfini,
b) en cas de détection d'un défaut par l'appareil de commande (10, 12, 14, 16, 18) vérifier à l'aide de l'information fournie si la tension d'alimentation globale (U₅) dépasse ou passe au-dessous du seuil de tension concerné,
c) en cas de dépassement ou de passage au-dessous du seuil de tension concerné, par la tension d'alimentation globale (U₅), écrite dans la mémoire de défaut de l'appareil de commande (10, 12, 14, 16, 18), lors de la détection d'un défaut, à la place d'une information représentant le défaut détecté, une information représentant le dépassement ou le passage au-dessous du seuil de tension concerné par la tension d'alimentation globale (U₅) en tant que cause possible du défaut.

9. Produit-programme d'ordinateur conforme à la revendication 8, réalisé pour permettre la mise en oeuvre des étapes du procédé conforme aux revendications 2 à 7.

10. Appareil de commande destiné à un réseau de communication (1) d'un véhicule, ce réseau de communication (1) comprenant un ensemble d'appareils de commande (10, 12, 14, 16, 18) qui sont connectés à un bus de données (20) et par lesquels des messages (N) peuvent être échangés, cet appareil de commande (10, 12, 14, 16, 18),
- pouvant être connecté à une source de tension (5),
- comprenant un dispositif de mesure de tension permettant de détecter la tension (U₁₀, U₁₂, U₁₄, U₁₆, U₁₈) appliquée à ses bornes d'alimentation, et
- pouvant accéder au moins en écriture à une mémoire de défaut centrale et/ou interne, pour permettre de documenter dans celle-ci une information concernant un défaut détecté par l'appareil de commande (10, 12, 14, 16, 18) concerné, cet appareil étant réalisé pour permettre la mise en oeuvre des étapes suivantes consistant à :
a) recevoir une information représentant la tension d'alimentation globale ((U₅) détectée de manière centralisée et/ou une information représentant un dépassement d'un seuil de tension supérieur prédéfini ou une information représentant un passage au-dessous d'un seuil de tension inférieur prédéfini,
b) en cas de détection d'un défaut par l'appareil de commande (10, 12, 14, 16, 18), effectuer un contrôle à l'aide de l'information fournie pour vérifier si la tension d'alimentation globale (U₅) dépasse ou passe au-dessous du seuil de tension concerné,
c) lorsque la tension d'alimentation globale (U₅) dépasse ou passe au-dessous du seuil de tension concerné, enregistrer dans la mémoire de défaut, de l'appareil de commande (10, 12, 14, 16, 18) lors de la détection d'un défaut, à la place d'une information représentant le défaut détecté, une information représentant le dépassement ou le passage au-dessous du seuil de tension concerné, par la tension d'alimentation globale (U₅) en tant que cause possible du défaut.

11. Appareil de commande conforme à la revendication 10, réalisé pour permettre la mise en oeuvre des étapes du procédé conforme aux revendications 2 à 7.

12. Réseau de communication d'un véhicule (1), comprenant un ensemble d'appareils de commande (10, 12, 14, 16, 18) qui sont connectés à un bus de données et peuvent, par l'intermédiaire de celui-ci, échanger des messages (N), les appareils de commande de l'ensemble d'appareils de commande (10, 12, 14, 16, 18) étant réalisés conformément à la revendication 10 ou 11.
